# EUROPEAN PATENT APPLICATION

(11) **EP 4 556 811 A1**
(43) Date of publication of application: **21.05.2025**
(21) Application number: 23209653.7
(22) Date of filing: 14.11.2023
(51) Int. Cl.: F24S 20/55, F24S 20/80, F24S 23/30, F24S 23/71, B64G 1/22, B64G 1/42

(54) **SOLAR ENERGY SYSTEM WITH A CONCENTRATOR HAVING A FOLDABLE STRUCTURE**

(71) Applicant: ParaLoon BV, 2910 Essen (BE)
(72) Inventor: Nelen, Robin, 2910 Essen (BE); Dumitru, Roxana, 10317 Berlin (DE); Grimmer, Philipp, 70197 Stuttgart (DE); Lucente, Paolo, 00135 Rom (IT); Skibicki, Marcin, Enfield, 06082 (US)
(74) Representative: Kayser, Christoph

(57) **Abstract**

A solar energy harvesting device (100) having a body comprising at least one solar energy concentrator (102, 102a, 102b), characterized in that the concentrator (102, 102a, 102b) has a parabolic, expandable structure with a volume that is smaller in a first state than in a second state, the parabolic concentrator structure being unfolded or inflated by mechanical rod structures or with gas from a gas source in the second state. A solar energy system includes at least one device (100) for harvesting solar photonic energy and thermal energy. A method of harvesting solar energy with an apparatus having a body and a concentrator, characterized by the steps of: providing a body having a parabolic concentrator in a first substantially folded/gas-free state; driving an unfolding mechanism or a gas source to actuate a gas release to unfold or inflate the parabolic concentrator and place it in a second unfolded/inflated state.

## Description

The present invention relates to a device for harvesting solar energy comprising a main body comprising at least one concentrator for solar energy and heat energy and a controlling means at least for controlling the concentrator, a solar energy system comprising at least one device for harvesting solar energy and thermal energy and a method of harvesting solar energy using a main body and a concentrator of the device and system.

Due to the financial costs, environmental impacts, and geopolitical dependencies of the current fossil fuel energy economy, there is a growing demand for clean, renewable energy, both on Earth and in space. Among renewable energy sources, solar power is one of the most promising technologies, but current state-of-the-art PV panels for use on Earth are still heavy and not easy to transport or install. These systems are not suitable for use in space because they are so heavy and may have to be disassembled into transportable parts on Earth before being flown into space. These individual parts would then have to be reassembled and aligned in space. The constructional problems that occur for the positioning of solar systems in space also exist to a lesser extent on earth for terrestrial use. Transporting small solar arrays from a manufacturing site to a final solar array location requires either a high volume of transport over land and water, or a significant design effort for assembly at the manufacturer's site, trial operation at the manufacturer's site, disassembly at the manufacturer's site, logistics, shipping, transport, unloading, and finally reassembly at the intended site. These complex and complicated relationships, apart from being associated with high costs and time, can easily lead to technical problems, such as assembly errors, and can have a detrimental effect on the functionality of the solar system, at least temporarily.

There are III-V multi-junction solar cells for space in the state of the art. These are lighter in weight but have high manufacturing costs and larger housings that are required for transport to space but are therefore disadvantageous for this transport. In addition, these PV panels with III-V multi-junction solar cells generally have an efficiency of less than 40% and do not convert heat or infrared radiation.

The object of the present invention is therefore to provide a device, a system and a method with which solar energy can be harvested in a constructively simple manner not only in space, but especially there.

According to the invention, the object is solved in that the concentrator has a foldable structure with a volume that is smaller in a first folded state than in a second unfolded state, the controlling means is configurated to control the transfer from the first folded state to the second unfolded state.

According to the invention, the object is also solved by a solar energy system comprising the device according to the invention.

Finally, the object is also solved by the method comprising the steps of,
- providing a main body having a foldable concentrator in a first folded state;
- driving an activation means to actuate a transfer from the first folded state to the second unfolded state.

Thus, the solution according to the invention provides an unfoldable, expandable or inflatable concentrator photovoltaic (CPV) structure that can be used with space-based solar power (SBSP) for deployment on Earth and in space, e.g. on Moon, on Mars or on any other planet or in any other orbit.

The parabolic concentrator system of the present invention in combination with different other systems could also be used e.g. as an optical telescope, as an antenna for telecommunication or even as an antenna for power beaming.

The present invention lowers manufacturing and sales costs, has a lower overall weight than comparable devices of conventional design, requires only a small bounding box when launched into space, and due to its structure, has better transportability and deployment capability by unfolding , as well as an overall higher conversion efficiency compared to the state of the art in PV technology.

The system of the present invention includes the concept of a satellite combined with a foldable device and power beaming technology, and the concept of a corresponding network of satellites.

An advantage of the present invention is that the foldable structure comprises a stabilizing device for stabilizing the concentrator in the second unfolded state. Such a foldable stabilizing device optimizes space requirements during transport and positioning of the device according to the invention in space but also on Earth.

However, it is also an advantage that the stabilizing device comprises at least one stabilizing means, wherein the stabilizing device having an inflatable structure which is inflated in the second unfolded state. In this second embodiment, balloon-like structures can be used for the concentrator or at least parts thereof.

A further advantage of the present invention is that the concentrator is connected to the main body via a stabilizing device. By means of the stabilizing device, the concentrator can be arranged at a predetermined distance from the main body and aligned with the main body.

A further advantage is that the stabilizing device comprises at least one stabilizing means, wherein the stabilizing device having a mechanically connected structure which is unfolded in the second unfolded state. In this first embodiment, mechanical connection and folding techniques known from space travel, for example, for unfolding telescopes, can be used.

It is also an advantage of the present invention that the concentrator in the unfolded , second state is arranged with respect to the main body in such a way that a focal point of the concentrator is located in the main body, at least with a center of the focal point. This makes it possible to obtain the maximum concentration of energy in the main body and to perform the conversion into electrical energy there. The alignment of the concentrator and the main body is such that the focal point is located in the main body, saving conduction paths and associated energy "losses" during conversion.

Another advantage of the present invention is that the main body comprises a device for converting photon energy and thermal energy concentrated in the focal point into electrical energy. This makes it possible to transfer the electrical energy by means of known transfer methods to another location where it can be used or further treated.

It is also of advantage to the present invention that the concentrator is formed with a rotating mass. Such a rotating mass facilitates the precise alignment and positioning of the very light parabolic concentrator at its working position. The rotating mass can be multipart and distributed around the circumference of the concentrator.

Another advantage of the present invention is also that a gas source is arranged in the main body and is connected to the concentrator via a valve device. The gas source can basically be arranged in any position, but it is advantageous if the gas source is arranged in the main body in a protected position. Then the gas source does not interfere with the concentrator inflation process. The concentrator can then be connected to the main body in a simple manner via the valve device and can be transferred from the uninflated, empty state to the inflated second state in response to a control signal sent by a remote controlling device, for example from a computer located anywhere on earth or in space.

It is also an advantage of the present invention that the concentrator is a lens. A lens concentrates the beams and focuses them on the focal point. Such a construction is very convenient for certain applications.

In alternative embodiments, however, it may also be advantageous for the concentrator to be a reflector. The choice between lens and reflector is subject to the decision of the man skilled in the art, depending also on the construction of the main body and the place of use.

Another advantage of the present invention is that the main body comprises a transmitting device suitable for transmitting electrical energy to a receiving device, which may be located anywhere on earth or in space. This allows the main body to be located at a great distance from the receiving device, for example in an embodiment of the main body as a space satellite, a space habitat, a space station or the like. This enumeration is not intended to be a limitation to the aforementioned locations. There is of course no limitation.

It is also an advantage of the present invention that the method according to the invention comprises launching the main body into a position on an orbit of the earth. This makes it possible to also use the main body in its space application, for example as a space satellite.

Further advantages result from the further features of the further dependent and independent claims.

The present invention shall focus the solar energy onto a focal point, using a lightweight material, e.g. carbon fiber rods or the like , in the first embodiment and lightweight, polymeric, inflatable tube structures in the second embodiment for the stabilizing structure of the concentrator, and suitable, lightweight, polymeric or textile films for the parabolic concentrator itself. In the center of the focal point, a satellite with efficient solar technology (e.g., thermo-photo-voltaic (TPV) cells, perovskite cells, high-power multi-junction cells or thin-film cells on the inventive structure combined with thermoelectric generators (TEG)) will collect the photonic as well as thermal energy and convert it to electrical energy. Alternatively, the photonic energy will be collected by coated thin-film PV cells on the foldable and alternatively also inflatable structure (lens or reflector) and the thermal energy will be collected by an energy converter in the focal point (TPV or TEG). The difference with regard to common PV cells is the collection of additional thermal energy by the use of novel thermal-to-electric energy converters without moving parts (TPV or TEG).

Today's space solar cells' technology is able to collect about 200 W/m². To collect 1 kW of electrical energy, a 5 m² panel is required. The concentrator system of the present invention would have a diameter of about 2.5 m, corresponding to 5 m². Considering the solar constant in space, approximately 1.35 kW/m², a total amount of 6.75 kW will be received by the foldable and alternatively also inflatable structure and focussed onto the focal point. Current TPV technology using selective emitters has an efficiency of about 40%. Alternatively, a 40 % efficiency should be reached by the combination of PV (about 30 %) and TEG (about 10%) technologies. Consequently, 2.7 kW of electricity could be generated at the focal point. This is 2.7 times more electrical energy compared to today's space solar panels.

Embodiments of the present invention are described in more detail below with reference to the drawings. Which is:
Fig. 1a a schematic, perspective view of a device according to the present invention, with a concentrator formed as a lens and a main body formed as a satellite;
Fig. 1b schematic side view of the device according to Fig. 1a;
Fig. 1c a schematic view of the device according to Fig. 1a from an energy facing side;
Fig. 2a a schematic side view of the device according to the present invention, in which the concentrator is designed as a reflector and the main body is designed as a satellite;
Fig. 2b a schematic view of the device according to Fig. 2a from an energy facing side;
Fig. 2c a schematic section view of the device along line A-A in Fig. 2b;
Fig. 3a a schematic view of the present invention in an embodiment as a space habitat;
Fig. 3b a schematic view of the present invention in one embodiment as a space station;
Fig. 3c a schematic view of the present invention in one embodiment as a terrestrial functional device;
Fig. 4a a schematic view of the present invention with a concentrator in an emptied state;
Fig. 4b a schematic view of the present invention with a concentrator in a partly unfolded/expanded state;
Fig. 4c a schematic view of the present invention with a concentrator in an unfolded/expanded state;
Fig. 5 a schematic view of the solar energy system according to the present invention in an embodiment in which the device is designed as a satellite and has a concentrator in the form of a lens;
Fig. 6 is a schematic representation of the solar energy system according to the present invention with the device according to the present invention in an embodiment as a satellite with a concentrator in the form of a reflector.

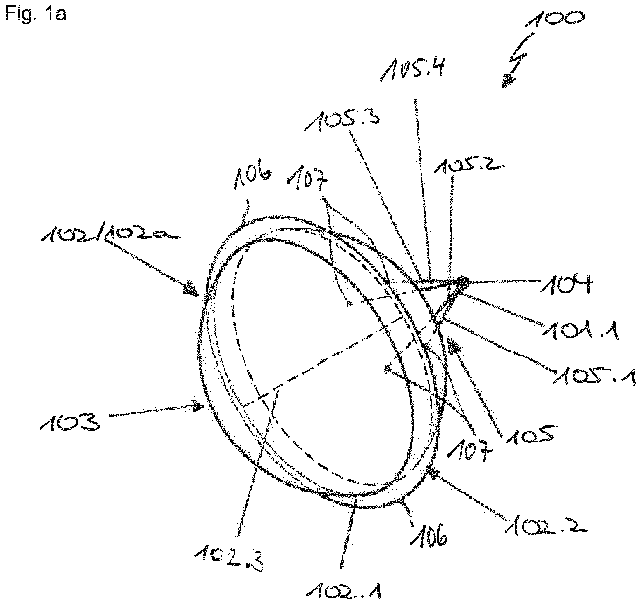

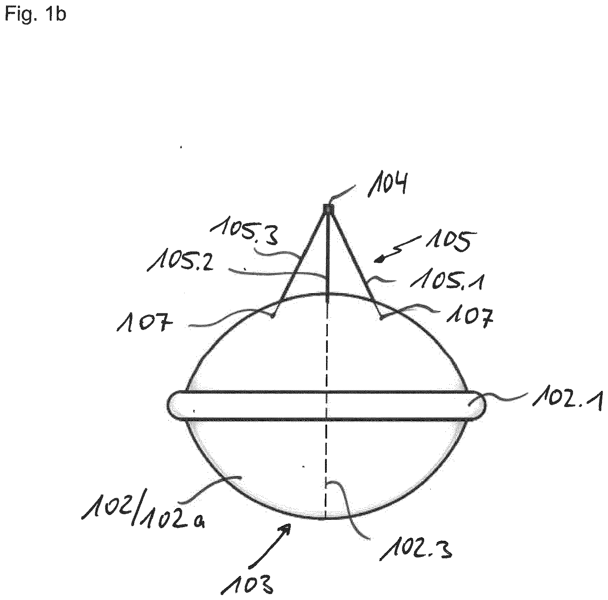

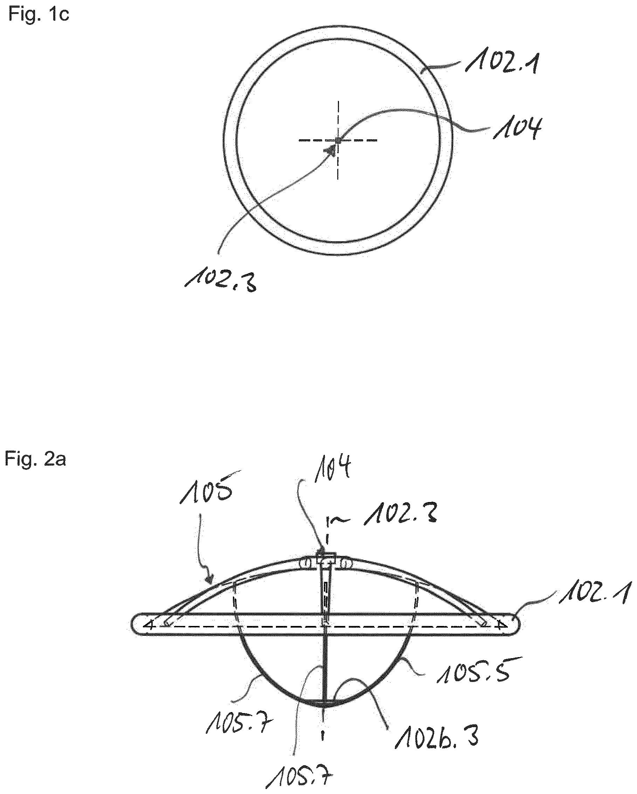

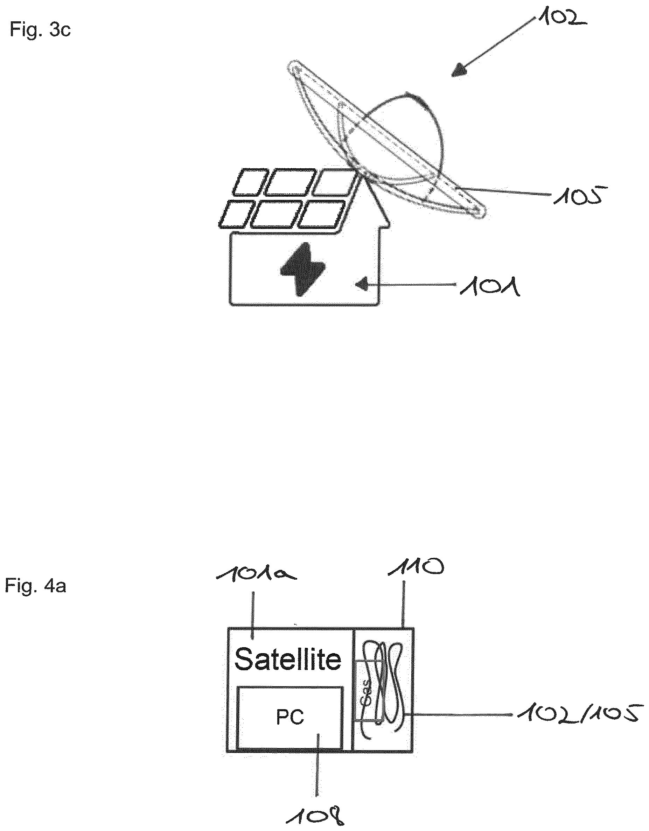

In Fig. 1a, Fig. 1b and Fig. 1c a device 100 according to the present invention is shown schematically and in perspective. The device 100 comprises a main body 101 and a concentrator 102. The concentrator 102 in Fig. 1a, Fig. 1b, Fig.1 c has a stabilizing and unfoldable structure, which in Fig. 1a, Fig. 1b and Fig. 1c is in the unfolded, expanded or inflated state. This unfolded, expanded or inflated state is the working state or functional state of the device 100 according to the invention and will be referred to as the second state below. A first state will be described in more detail later under Fig. 4a.

In this second state, the concentrator 102 being unfolded and/or expanded or inflated is configured to form a lens 102a that allows solar energy and heat energy to enter on a facing side 103 directed towards the sun. The facing side 103 is located on a side opposite to the main body 101 and focuses solar energy and heat energy onto a focal point 104 due to the lens-shaped configuration. In the embodiment shown in Fig. 1a, Fig. 1b and Fig. 1c, the focal point 104 is located inside the main body 101. In the embodiment shown in Fig. 1a, Fig 1b and Fig. 1c, the main body 101 is configured to be a satellite 101a. The concentrator 102 is connected to the main body 101 via a stabilizing device 105. The stabilizing device 105 comprises at least a first stabilizing means 105.1. In the embodiment shown in Fig.1a, Fig. 1b and Fig. 1c, four stabilizing means 105.1, 105.2, 105.3 and 105.4 are provided. However, in other embodiments, two, three or more than four stabilizing means 105.1, 105.2, 105.3, 105.4 may be provided.

In the first embodiment, the stabilizing device 105 with the at least one stabilizing means 105.1, 105.2, 105.3, 105.4 are rods which also forms the foldable structure. Such a mechanical structure with rods is made from lightweight materials. Such materials can be any materials known in lightweight construction, for example carbon or carbon-containing composites, which are hinged together.

In the second embodiment, as shown in Fig.1a, Fig. 1b and Fig. 1c, an inflatable structure comprises the at least one stabilizing means 105.1, 105.2, 105.3, 105.4, which are tubes. The volume of the inflatable structure is gas-connected to that of the concentrator 102 and can thus be inflated together with the concentrator 102.

The inflatable tubes of the second embodiment each consist of inflatable polymeric tubes on the inner side and of a textile fabric on the outer side for maintaining the correct form, structural strength and protection.

The concentrator 102, which is formed as a lens 102a, has a stiffening ring 102.1 which, in the second embodiment shown in Fig.1a, Fig. 1b and Fig. 1c, extends as an equator 102.2 around a rotation axis 102.3 of the lens 102a. A rotating mass 106 is attached to the stiffening ring 102.1 to support rotation of the lens 102a about the rotation axis 102.3. In the embodiment shown in Fig.1a, Fig. 1b and Fig. 1c, the rotating mass 106 also forms a connection point 107 between the support device 105 and the concentrator 102,
respectively. In the first or second embodiment, one end of the at least one stabilizing means 105.1, 105.2, 105.3, 105.4 is connected at the connection point 107 to the concentrator 102 or the lens 102a in the region of the stiffening ring 102.1. In other embodiments, the respective connection point 107 may also be provided at another location of the circumference of the lens 102a and also independently of the rotating mass 106.

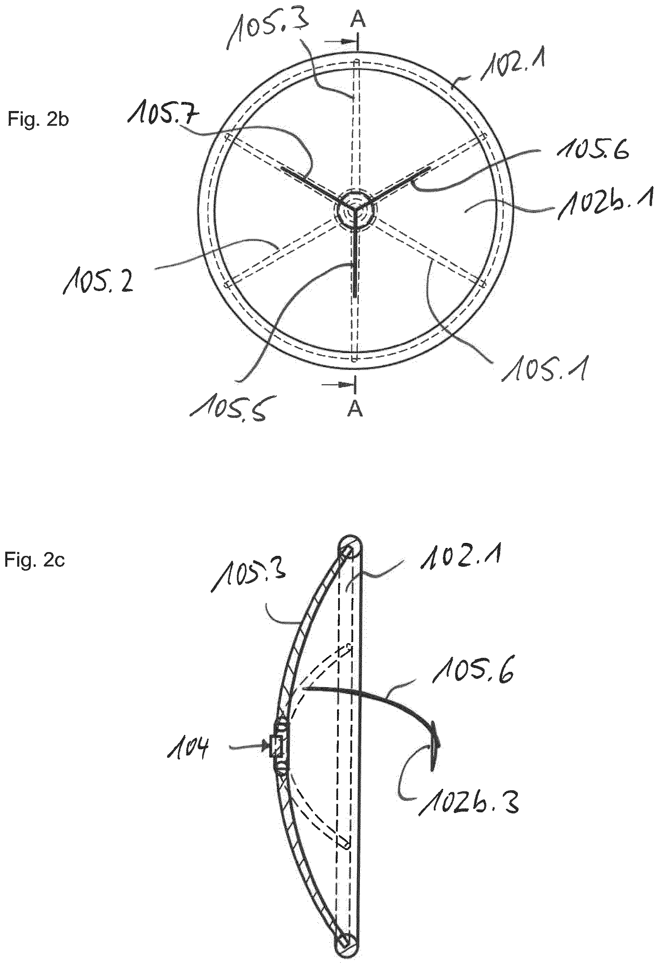

In Fig. 2a, Fig. 2b and Fig. 2c, the device 100 according to the invention is shown in an embodiment in which the concentrator 102 is formed as a reflector 102b. In the embodiment shown in Fig. 2a, Fig. 2b and Fig. 2c, the reflector 102b is located on a side of the main body 101 facing the sun and reflects the radiation incident on its mirror-like underside 102b.1 back to a second mirror 102b.3 and from there to the focal point 104 in the main body 101. The second mirror 102b.3 is held by retaining elements 105.5, 105.6 and 105.7.he reflector 102b also has a foldable structure which, has a light-reflecting inner layer 102b.2 on a side towards the incident rays. Otherwise, the construction of the device 100 in Fig. 2a, Fig. 2b and Fig. 2c is identical to that in Fig.1a, Fig. 1b and Fig. 1c.

The concentrator 102 in the first and second embodiment shown in Fig.1a, Fig. 1b and Fig. 1c and Fig. 2a, Fig. 2b and Fig. 2c is preferably made of a lightweight polymeric material that is stretchable and expands in response to a gas pressure, making it suitable for inflating balloon-like structures. Such materials are generally known and are not the subject of the present invention. Alternatively, the concentrator 102 in Fig.1a, Fig. 1b and Fig. 1c and Fig. 2a, Fig. 2b and Fig. 2c may be made of a lightweight textile or solid material, which is a lightweight textile material that forms a parabolic textile form or a solid material that forms a hinged mechanical unit.

In all embodiments, the concentrator 102 is connected to a side wall 101.1 of the main body 101 and thus also of the satellite 101a. In the first embodiment, via this side wall 101.1, a gas source 108 present in the satellite 101a, for example in the form of at least one gas cylinder, may be connected to the concentrator 102 via a valve device (not shown). Alternatively or additionally, at least one smaller gas cylinder may be attached to the periphery of the concentrator 102, for example to the stiffening ring 102.1 In such an embodiment, in which at least one small gas cylinder is attached to the periphery of the concentrator 102, it may also form the rotating mass 106. In such a case, the rotating mass 106 could be replaced in whole or in part by the at least one gas cylinder and accordingly could be omitted in whole or in part.

In the second embodiment, the device of the present invention may be inflated by a gas tank / supply on the satellite, the gas inlet would be through a backplate connection, leading the gas into the inflatable tubes. Furthermore, the device might have smaller gas bottles with gas nozzles on the inflatable circumference, which can additionally be used for setting the system into spinning motion for stabilization.

The backplate at the back/center of the inflatable structure enables spinning of the inflatable structure and may be connected to the main body or satellite by screws or the like. The inflatable structure might be covered inside the bounding box 110 for protection, which opens in space just before inflation.

In the focal point 104, solar cells such as thermo-photo-voltaic cells (TPV), perovskite cells, high power multi-junction cells or thin film cells are provided, which are combined with a thermoelectric generator (TEG) and collect photon energy and thermal energy and convert them into electrical energy. This solar technology, which is known per se, is summarized in the following under the term conversion device 109. The conversion device 109 and thus also the focal point 104 are arranged in the main body 101 in Fig.1a, Fig. 1b and Fig. 1c and Fig. 2a, Fig. 2b and Fig. 2c respectively.

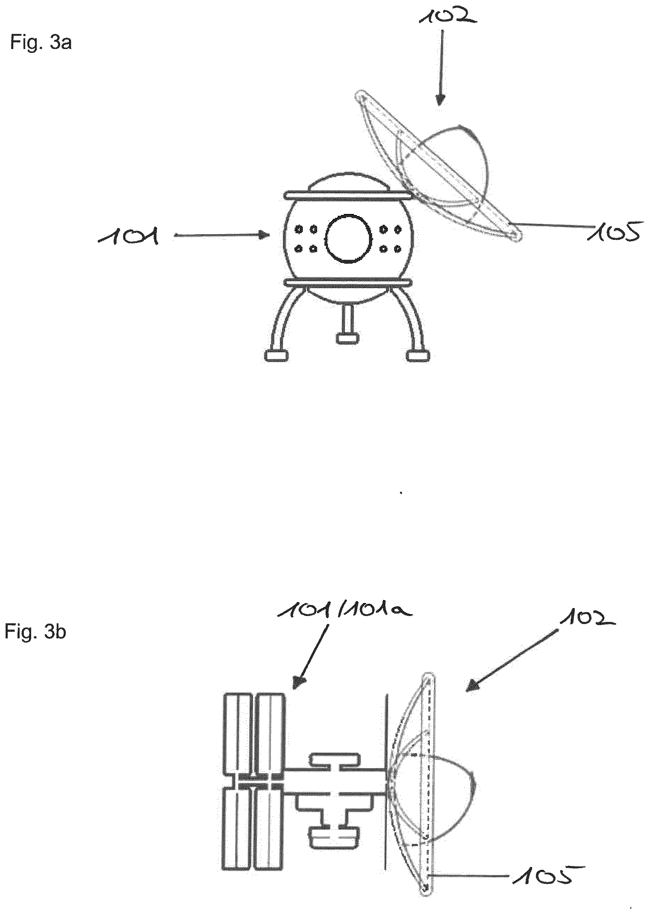

In all mentioned embodiments and in particular in those shown in Fig.1a, Fig. 1b and Fig. 1c and Fig. 2a, Fig. 2b and Fig. 2c, the main body 101 is a satellite 101a. However, in other embodiments, the main body 101 may be formed for other applications in space and on Earth. Some non-exhaustive examples of this are shown schematically in Fig. 3a, Fig. 3b and Fig. 3c.

The device according to the present invention finds its preferred application in space, for example in extraterrestrial living units (Fig. 3a), in space stations (Fig. 3b) or in other devices that can be positioned in space.

However, the present invention is also suitable for use on Earth. For example, it can also be used on buildings or other support facilities, such as masts, stands or the like (Fig. 3c). In Figs. 3a, 3b and 3c, the device 100 according to the invention is again shown in the unfolded/expanded or inflated working state, i.e., the second state.

In the following, the first state of the device 100 or the concentrator 102 will now be described. The first state is a transport state in which the concentrator 102, i.e., the lens 102a or the reflector 102b, is in a folded and/or deflated or substantially folded, not-expanded or deflated state, respectively. The volume of the concentrator 102 in the first state is smaller than its volume in the second state.

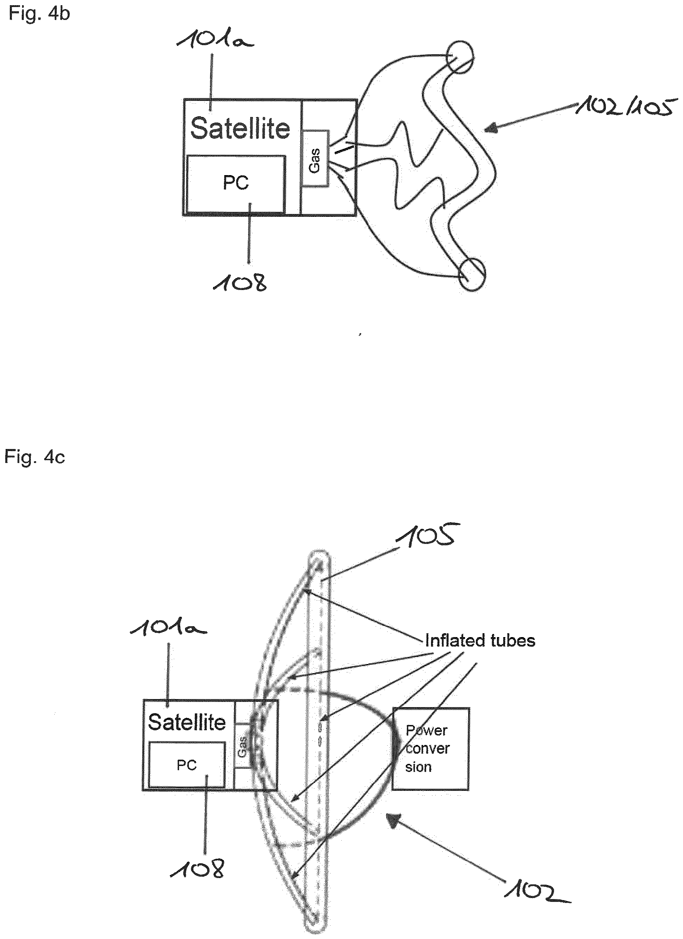

The main body 101 is again shown as satellite 101a in Fig. 4a, Fig. 4b and Fig. 4c. In Fig. 4a, the substantially folded first state is shown schematically. The satellite 101a is connected to the concentrator 102 via the side wall 101.1. The valve means (not shown) is closed so that, in the second embodiment, the gas source 108 cannot discharge gas into the volume of the concentrator 102 via the valve means. In Fig. 4a, the concentrator 102 is collapsed in the first folded state and occupies very little space. The lightweight, gas-tight polymeric material of the second embodiment folds up very easily when deflated or depressurized and can be stored in a very small bounding box 110. The same will also be the case with a foldable light mechanical structure as provided for the first embodiment. In this first state, the transport state, the device 100 according to the invention can be easily transported, for example, from a manufacturing site to a terrestrial building or the like, to be assembled there and transferred to the second state at the end. For the extraterrestrial application according to Figs. 3a and 3b, the device 100 according to the invention is launched into space by a launch vehicle (not shown) in the state shown in Fig. 4a, and then released into an orbit for satellites 101a at a suitable position. The suitable position is selected in dependence on a ground station and/or a receiving device. The device 100 according to the invention also comprises a control device (not shown) and a control signal transmitting and receiving device (not shown) so that it can be controlled from Earth or another place in space and transmit the electrical energy converted from the collected photon energy and thermal energy to the power-receiving device or ground station using a known transmission technique.

After the satellite 101a is deployed, the device 100 according to the invention is actuated by the control device to initiate the inflation process. Specifically, in the second embodiment the actuation causes the valve device to be actuated and opened. The gas can then flow from the gas source 108 at positive pressure into the volume of the concentrator 102 and expand the expandable polymer material. The concentrator 102 and stabilizing tube 105 are thereby inflated.

Fig. 4b schematically illustrates a partly unfolded, expanded or inflated transition state of the concentrator. This is to make the progress of the unfolding, expanding or inflation understandable.

In Fig. 4c, the second unfolded, expanded or inflated state, i.e., the working state, has been reached. Via the control device, the satellite 101a with the concentrator 102, which may form a lens 102a or a reflector 102b, can then be aligned with the sun in such a way that the irradiation of solar energy and thermal energy onto the concentrator 102 is optimal. The incident or impinging energy is focused by the concentrator 102 on the focal point 104 in the satellite 101a and thereby concentrated.

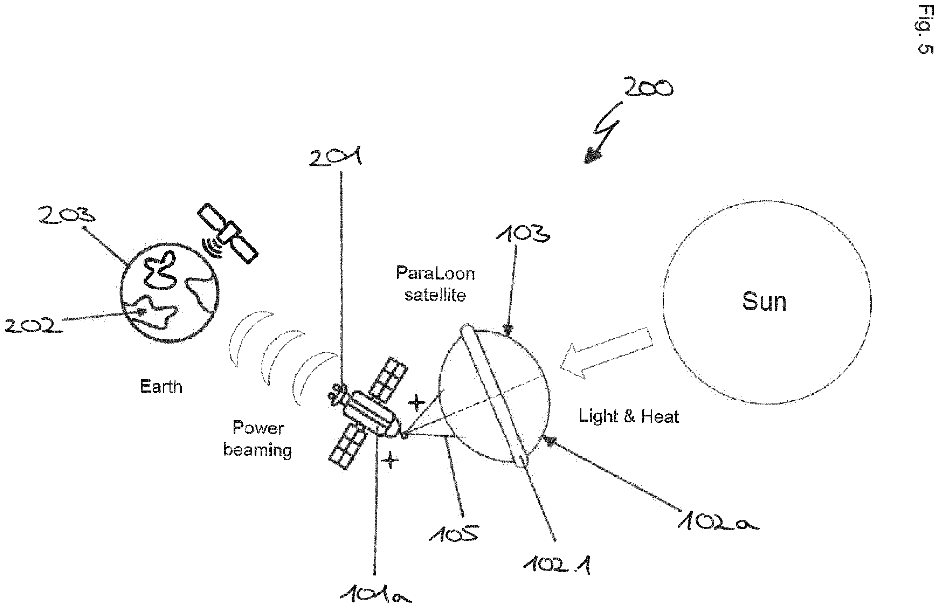

In Fig. 5, a solar energy system 200 according to the invention is shown schematically. In Fig. 5, the concentrator 102 has the embodiment of the optical lens 102a. Solar energy and thermal energy from the sun are incident on a surface of the concentrator 102 and are focused by the concentrator 102 on the focal point 104 in the main body 101 and in the satellite 101a, respectively. The satellite 101a contains the conversion means 109 for converting the solar energy and thermal energy into electrical energy, which is then transmitted to receiving means 202 on earth 203 via transmitting means 201 for transmitting electrical power by power beaming.

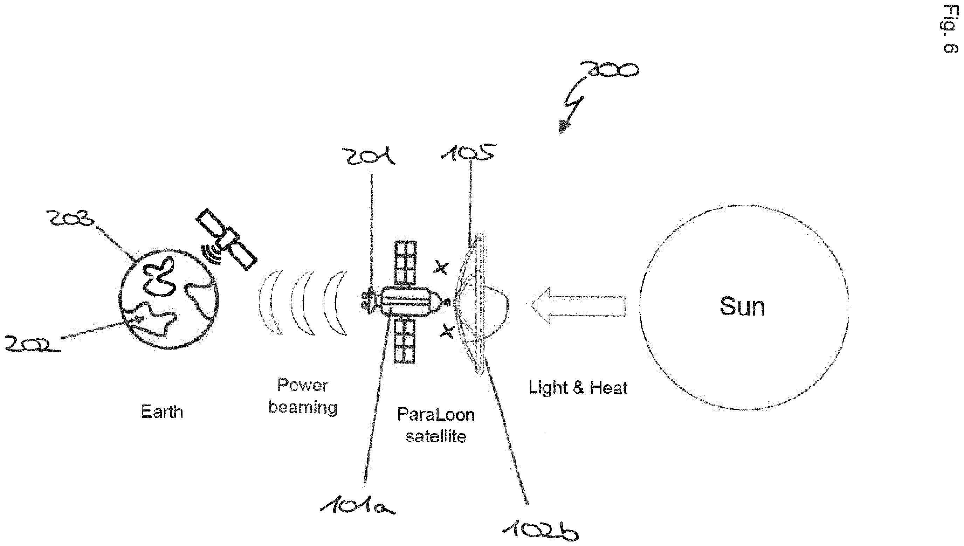

In Fig. 6, the solar energy system 200 according to the invention is schematically shown with the concentrator 102 in an embodiment as the reflector 102b. The solar energy system 200 functions as already described in Fig. 5. The solar energy and thermal energy are focussed by the reflector 102b onto the focal point 104 and converted into electrical energy in the conversion device 109. The electrical energy is then transmitted to the receiving device 202 on the ground 203 via the transmitting device 201 using power beaming.

A ground segment with the receiving device 202 may be a typical transmitter/receiver to communicate and/or to operate with satellite 102a. On the satellite 102a a transmitter/receiver antenna for communication and/or for operation with the ground segment may be installed. Typically, antennas for communication and/or for operation of the satellite are different to those of power beaming but will be operated by the ground segment as well. The orientation in space may be controlled by a satellite positioning system or by gas nozzles, in the folded/ not-expanded or deflated state. The inflation in space may be activated by controlling gas tanks on the satellite 102a and/or on the inflatable tubes. A stabilization in space may be controlled by spinning along the center of the reflector/balloon by gas nozzles, like reaction wheels of a satellite 102a.

### List of reference signs

- 100: Device
- 101: Main body
- 101.1: Side wall
- 101a: Satellite
- 102: Concentrator
- 102.1: Stiffening ring
- 102.2: Equator
- 102.3: Rotation axis
- 102a: Lens
- 102b: Reflector
- 102b.1: Bottom side of reflector
- 102b.2: Inner face of reflector
- 102b.3: mirror
- 103: Side facing the sun
- 104: Focal point
- 105: Stabilizing device
- 105.1: First stabilizing means
- 105.2: Second stabilizing means
- 105.3: Third stabilizing means
- 105.4: Fourth stabilizing means
- 105.5: First retaining element
- 105.6: Second retaining element
- 105.7: Third retaining element
- 106: Rotating mass
- 107: Connecting point
- 108: Gas source
- 109: Conversion device
- 110: Bounding box
- 200: Solar energy system
- 201: Energy transmitting device
- 202: Energy receiving device
- 203: Earth

## Claims

1. A device (100) for harvesting solar energy comprising a main body (101; 101a) comprising at least one concentrator (102; 102a; 102b) for solar energy and heat energy and a controlling means at least for controlling the concentrator
**characterized in**
**that** the concentrator (102; 102a; 102b) has a foldable structure with a volume that is smaller in a first folded state than in a second unfolded state, the controlling means is configurated to control the transfer from the first folded state to the second unfolded state.

2. A device according to claim 1,
**characterized in that** the foldable structure comprises a stabilizing device (105; 105.1, 105.2; 105.3; 105.4) for stabilizing the concentrator (102; 102a; 102b) in the second unfolded state.

3. A device according to claim 1 or 2,
**characterized in,**
**that** the concentrator (102; 102a; 102b) is connected to the main body (101; 101.1; 101a) via said stabilizing device (105; 105.1, 105.2; 105.3; 105.4).

4. A device according to claim 1 or 3,
**characterized in that**,
the stabilizing device (105; 105.1, 105.2; 105.3; 105.4) comprises at least one stabilizing means (105.1, 105.2; 105.3; 105.4).

5. A device according to claim 1 or 4,
**characterized in**
**that** the concentrator (102; 102a; 102b) in the second unfolded state is arranged in relation to the main body (101; 101.1; 101a) in such a way that a focal point (104) of the concentrator (102; 102a; 102b) is located in the main body (101; 101.1; 101a).

6. A device according to claim 1 or 5,
**characterized in**
**that** the main body (101; 101.1; 101a) comprises means for converting photon energy and thermal energy concentrated in the focal point (104) into electrical energy.

7. A device according to any one of claims 1 or 6,
**characterized in**
**that** the concentrator (102; 102a; 102b) is formed with a rotating mass (106).

8. A device according to claim 1 or 7,
**characterized in that**,
the stabilizing device (105; 105.1, 105.2; 105.3; 105.4) comprises at least one stabilizing means (105.1, 105.2; 105.3; 105.4), wherein the stabilizing device having a mechanically connected structure which is unfolded in the second unfolded state.

9. A device according to claim 1 or 7,
**characterized in that**,
the stabilizing device (105; 105.1, 105.2; 105.3; 105.4) comprises at least one stabilizing means (105.1, 105.2; 105.3; 105.4), wherein the stabilizing device having an inflatable structure which is inflated in the second unfolded state.

10. A device according to claim 1 or 9,
**characterized in**
**in that** a gas source (108) is arranged in the main body (101; 101.1; 101a) and is connected to the concentrator (102; 102a; 102b) via a valve device.

11. A device according to claim 10,
**characterized in**
**in that** the gas source (108) is arranged in the main body (101; 101.1; 101a) and is connected to the stabilizing device (105; 105.1, 105.2; 105.3; 105.4) of the concentrator (102; 102a; 102b) via a valve device.

12. A device according to claim 1,
**characterized in**
**that** the concentrator (102; 102a; 102b) is a lens (102a) or a reflector (102b), wherein the lens (102a) or the reflector (102b) focuses on a focal point (104) in the main body (101; 101.1; 101a).

13. A device according to claim 1 or 12,
**characterized in**
**that** the main body (101; 101.1; 101a) is an object selected from the group satellite (102a), space habitat, space station.

14. A device according to any of the preceding claims,
**characterized in**
**that** the main body (101; 101.1; 101a) comprises an energy transmitting device (201) adapted to transmit electrical energy to an energy receiving device (202).

15. A solar energy system (200) comprising at least one device (100) for harvesting solar energy and thermal energy according to claim 1 or 14.

16. A solar energy system according to claim 15,
**characterized in**
**that** the at least one device (100) transmits the electrical energy via the energy transmitting device (201) to an energy receiving device (202) on the ground (203) .

17. A method of harvesting solar energy using a device according to any one of claims 1 to 14, comprising a main body and a concentrator,
**characterized by** the steps of,
- providing a main body having a foldable concentrator in a first folded state;
- driving an activation means to actuate a transfer from the first folded state to the second unfolded state.

18. A method according to claim 17,
**characterized by** a further step after the step of providing and before the step of actuating,
- launching the main body into a position on an orbit of the earth or of any other planet.

19. A method according to claim 18,
**characterized in that**,
the position on the orbit of the earth or of any other planet is chosen in dependence on a ground station.

20. A method according to claim 19,
**characterized in that**,
the dependency is determined from a transmitting power of the main body and a receiving power of the ground station.
